# EUROPÄISCHE PATENTSCHRIFT

(11) **EP 3 097 058 B1**
(45) Veröffentlichungstag und Bekanntmachung des Hinweises auf die Patenterteilung: **29.07.2020**
(21) Anmeldenummer: 15708696.8
(22) Anmeldetag: 20.01.2015
(51) Int. Cl.: C02F 1/78, C02F 1/32, C02F 103/42

(54) **VORRICHTUNG ZUR DESINFEKTION VON WASSER MIT OZON UND ULTRAVIOLETT-LICHT**
DEVICE FOR DISINFECTING WATER WITH OZONE AND ULTRAVIOLET LIGHT
DISPOSITIF DE DÉSINFECTION D'EAU AVEC DE L'OZONE ET DE LA LUMIÈRE ULTRAVIOLETTE

(30) Priorität: 21.01.2014 AT 392014
(43) Veröffentlichungstag der Anmeldung: 30.11.2016
(73) Patentinhaber: Gruber, Egon, 8055 Graz (AT)
(72) Erfinder: Gruber, Egon, 8055 Graz (AT)
(74) Vertreter: KLIMENT & HENHAPEL
(86) Internationale Anmeldenummer: PCT/AT2015/050018
(87) Internationale Veröffentlichungsnummer: WO 2015/109353

(56) Entgegenhaltungen:
- EP-A1- 2 527 302
- WO-A1-98/41315
- WO-A1-2013/155283
- JP-A- 2006 255 596
- US-A1- 2005 163 648
- US-A1- 2007 012 883
- US-A1- 2009 001 029

## Beschreibung

Die Erfindung betrifft eine Vorrichtung zur Desinfektion von Wasser eines Badebeckens mit einem Zulauf für Wasser vom Badebecken, einer Ozonierungseinrichtung und einer Mischstrecke für ozonhältiges Wasser, wobei die Ozonierungseinrichtung zumindest eine UV-Lichtquelle zur Bildung von Ozon umfasst, sowie eine Beimischeinheit zur Beimengung des gebildeten Ozons zum Wasser des Zulaufs, gemäß dem Oberbegriff von Anspruch 1.

Zur Desinfektion von Wasser eines Badebeckens, insbesondere von so genannten Whirlpools, wird zumeist die Beimengung chlorhältiger Desinfektionsmittel verwendet. Alternativ oder ergänzend zur Chlorierung des Badewassers ist auch der Einsatz von Ozon bekannt. Ozon ist ein sehr effektives Desinfektionsmittel, im Gegensatz zu Chlor aber annähernd geruchlos. Ozon kann etwa durch ultraviolettes Licht (UV-Licht) geeigneter Frequenz gebildet werden, indem ein Luftstrom an der UV-Lichtquelle vorbeigeführt wird, um das in der Luft enthaltene Sauerstoffmolekül zunächst in elementaren Sauerstoff zu spalten und in weitere Folge durch Anlagerung des elementaren Sauerstoffs an molekularen Sauerstoff Ozon zu bilden. In apparativer Hinsicht wird dieser Vorgang etwa mithilfe eines Ozongenerators bewerkstelligt, bei dem die UV-Lichtquelle von einer gasdichten Umhüllung umgeben ist, in der der Luftstrom geführt ist und dem ultravioletten Licht ausgesetzt wird. Der mit Ozon angereichte Luftstrom verlässt in weiterer Folge den Ozongenerator und wird einer Beimischeinheit zugeführt, die den mit Ozon angereicherten Luftstrom im Zulauf dem zu desinfizierenden Wasser beimengt. Die Beimischeinheit kann etwa als Venturidüse ausgeführt sein. In herkömmlicher Weise ist der Ozongenerator als separate Einheit ausgeführt, der mit dem Zulauf über die Beimischeinheit verbunden ist. Im Folgenden wird der Ozongenerator mit der Beimischeinheit auch als Ozonierungseinrichtung bezeichnet. Herkömmliche Ausführungen einer Ozonierungseinrichtung werden etwa in der US 4230571 und der WO 2013/155283 beschrieben. Weitere Vorrichtungen zur Desinfektion von Wasser wurden in der WO 98/41315 A1, JP 2006-255596 A, US 2005/163648 A1, WO 2013/155283 A1, US 2009/001029 A1, US 2007/012883 A1 und der EP 2 527 302 A1 beschrieben.

Nach Beimengung des ozonhältigen Luftstromes in den Wasserstrom werden Luftbläschen im Wasserstrom gebildet, an deren Oberflächen sich die desinfizierende Wirkung vollzieht, indem das im Luftbläschen enthaltene Ozon die im Wasserstrom enthaltenen Verunreinigungen oxidiert. Dieser Vorgang wird durch eine gute Durchmischung der Luftbläschen mit dem Wasserstrom und durch eine Verkleinerung der Luftbläschen begünstigt. Daher schließt sich an die Beimischeinheit des Zulaufes eine Mischstrecke an, in der das ozonhältige Wasser durchmischt wird, um die desinfizierende Wirkung des Ozons zu unterstützen, bevor das Wasser wieder dem Badebecken zugeführt wird. Unter der Bezeichnung "ozonhältiges Wasser" wird hierbei der Wasserstrom nach Beimengung des ozonhältigen Luftstromes bezeichnet, unabhängig davon, ob das Ozon innerhalb von eingedüsten Luftbläschen im Wasserstrom vorliegt, oder im Wasserstrom gelöst ist. Die Mischstrecke wird in herkömmlicher Weise zumeist als verlängerte Schlauchleitung ausgeführt, die zur Verringerung des Platzbedarfes aufgerollt oder mäanderförmig angeordnet wird. Freilich setzt sich die desinfizierende Wirkung des Ozons auch nach Verlassen der Mischstrecke fort, sofern noch ausreichende Mengen an Ozon vorhanden sind, etwa im Badebecken selbst, wo im Wasser gelöstes Ozon in der Regel ausgast und das Wasser verlässt.

Bei bekannten Ausführungen ist die desinfizierende Wirkung des Ozons jedoch unbefriedigend, sodass in der Regel auf eine zusätzliche Chlorierung nicht verzichtet werden kann. Zudem weist die in Form einer verlängerten Schlauchleitung ausgeführte Mischstrecke einen entsprechenden Platzbedarf auf und stellt einen unansehnlichen Bestandteil herkömmlicher Badebecken dar. Ein weiterer Nachteil besteht darin, dass die ordnungsgemäße Funktion der zur Desinfektion vorgesehenen Bauteile kaum überprüfbar ist, sodass auf indirekte Parameter wie etwa dem pH-Wert des Badewassers zurückgegriffen werden muss. In der Praxis wird eine unzureichende Desinfektion des Badewassers aber oft erst anhand sichtbarer Beeinträchtigungen des Badewassers selbst festgestellt, also zu einem Zeitpunkt, an dem das Badebecken bereits nicht mehr benutzt werden sollte.

Es ist daher das Ziel der Erfindung eine Vorrichtung zur Desinfektion von Wasser eines Badebeckens bereit zu stellen, die eine verbesserte Desinfektion ermöglicht und dabei platzsparender und optisch ansprechender als herkömmliche Vorrichtungen ausgeführt werden kann.

Diese Ziele werden durch die Merkmale von Anspruch 1 erreicht. Anspruch 1 bezieht sich auf eine Vorrichtung zur Desinfektion von Wasser eines Badebeckens mit einem Zulauf für Wasser vom Badebecken, einer Ozonierungseinrichtung und einer Mischstrecke für ozonhältiges Wasser, wobei die Ozonierungseinrichtung zumindest eine UV-Lichtquelle zur Bildung von Ozon sowie eine Beimischeinheit zur Beimengung des gebildeten Ozons zum Wasser des Zulaufs umfasst, und die Mischstrecke ein mit dem Zulauf verbundenes Gehäuse umfasst, wobei die zumindest eine UV-Lichtquelle am Gehäuse oder innerhalb des Gehäuses mit einer in das Gehäuseinnere gerichteten Emission des UV-Lichts angeordnet ist, und das Gehäuse zur visuellen Inspektion des Gehäuseinneren mit einer durchsichtigen Platte versehen ist. Erfindungsgemäß wird hierbei vorgeschlagen, dass das Gehäuse in das Gehäuseinnere abstehende Umlenkflächen für das Wasser bildet, die eine mäanderförmige Strömung innerhalb des Gehäuses sicherstellen, und die zumindest eine innerhalb des Gehäuses angeordnete UV-Lichtquelle eine Umhüllung aufweist, die an einer Umlenkfläche angeordnet ist, oder einen Teil der Umlenkfläche bildet, wobei innerhalb des Gehäuses eine Abfolge parallel angeordneter und jeweils mit einer UV-Lichtquelle versehener Umlenkflächen vorgesehen ist, und die Umhüllungen aufeinanderfolgender UV-Lichtquellen über einen Luftströmungskanal miteinander verbunden sind und das Gehäuse eine Ansaugöffnung für Luft, sowie eine mit der Beimischeinheit verbundene Abgabeöffnung aufweist. Die in das Gehäuseinnere abstehenden Umlenkflächen ermöglichen einerseits eine Verlängerung der Mischstrecke bei gegebenen Gehäuseabmessungen und verstärken andererseits die Turbulenz der Wasserströmung. Beide Effekte verbessern den Kontakt des Wassers mit Ozon und dadurch die desinfizierende Wirkung. Das Gehäuse bildet somit eine Mischkammer für das mit Ozon angereicherte Wasser. Aufgrund der Anordnung zumindest einer UV-Lichtquelle am Gehäuse oder innerhalb des Gehäuses mit einer in das wasserführende Gehäuseinnere und somit auf das Wasser gerichteten Emission des UV-Lichts wird die desinfizierende Wirkung verstärkt, da UV-Licht auch unmittelbar desinfizierend wirkt. Die UV-Lichtquelle wird somit nicht nur zur Erzeugung von Ozon verwendet, sondern auch zur direkten Desinfektion des Wassers herangezogen, sodass bei demselben elektrischen Energieverbrauch zum Betrieb der UV-Lichtquelle eine verbesserte Desinfektion bewirkt werden kann. Des Weiteren ist das Gehäuse mit einer durchsichtigen Platte versehen, die eine visuelle Inspektion des Gehäuseinneren ermöglicht. Auf diese Weise kann nicht nur die Wasserströmung kontrolliert werden, also der ordnungsgemäße Betrieb der Wasserzirkulationspumpe, sondern auch die Bläschenbildung, also die ordnungsgemäße Funktion der Luftstromführung und der Beimischeinheit, sowie die korrekte Funktion der UV-Lichtquellen selbst, die am Gehäuse oder innerhalb des Gehäuses angeordnet sind, da UV-Lichtquellen immer auch einen Anteil an sichtbarem Licht emittieren. Falls die UV-Lichtquellen ordnungsgemäß funktionieren, kann aber auch von einer hinreichenden Ozonbildung ausgegangen werden. Auf einen Blick können somit die für die Desinfektion relevanten Betriebsparameter überprüft werden, oder auch Verschmutzungen an den beteiligten Bauteilen festgestellt werden, insbesondere im Bereich der UV-Lichtquellen.

Erfindungsgemäß weist die zumindest eine innerhalb des Gehäuses angeordnete UV-Lichtquelle außerdem eine Umhüllung auf, die an einer Umlenkfläche angeordnet ist oder einen Teil der Umlenkfläche bildet. Die UV-Lichtquelle ragt somit mit geringem Abstand zur Wasserströmung in das Gehäuseinnere, sodass eine optimale Exposition des Wassers mit UV-Licht bewirkt wird. Zudem wird der gesamte Gehäuseinnenraum beleuchtet, sodass die visuelle Inspektion des Gehäuseinneren sowie der UV-Lichtquellen selbst erleichtert wird. Ist außerdem innerhalb des Gehäuses vorzugsweise eine Abfolge parallel angeordneter und jeweils mit einer UV-Lichtquelle versehener Umlenkflächen vorgesehen, um die Desinfektion und die Ausleuchtung des Gehäuseinneren zu maximieren, kann im Fall einer Fehlfunktion einer UV-Lichtquelle leicht eruiert werden, bei welcher UV-Lichtquelle eine Betriebsstörung vorliegt. Die UV-Lichtquellen sind dabei vorzugsweise austauschbar im Gehäuse montiert, sodass einzelne UV-Lichtquellen leicht entnommen und ersetzt werden können.

Es werden mehrere UV-Lichtquellen verwendet, und die Umhüllungen aufeinanderfolgender UV-Lichtquellen sind erfindungsgemäß über einen Luftströmungskanal miteinander verbunden, wobei das Gehäuse eine Ansaugöffnung für Luft, sowie eine mit der Beimischeinheit verbundene Abgabeöffnung aufweist. Bei der Umhüllung handelt es sich um die vorgenannte gasdichte Umhüllung zur Führung des Luftstromes. Auf diese Weise wird derselbe Luftstrom mehrmals an UV-Lichtquellen vorbeigeführt, sodass sich der Luftstrom zunehmend mit Ozon anreichert, bis er über die Abgabeöffnung das Gehäuse verlässt und der Beimischeinheit zugeführt wird. Die Umhüllung selbst ist dabei vorzugsweise wasserdicht innerhalb des Gehäuses angeordnet, und die UV-Lichtquelle ist austauschbar innerhalb der Umhüllung angeordnet. Somit kann ein Austausch der Umhüllung erfolgen, ohne das Gehäuse entleeren zu müssen.

Des Weiteren wird vorgeschlagen, dass das Gehäuse zumindest auf der der durchsichtigen Platte gegenüberliegenden Seite in Richtung der durchsichtigen Platte verspiegelt ausgeführt ist. Auf diese Weise wird die Ausleuchtung des Gehäuseinneren verbessert und somit die visuelle Inspektion des Gehäuseinneren erleichtert. Zudem kann eine optisch sehr ansprechende Verwirklichung der erfindungsgemäßen Mischstrecke erreicht werden.

Zur Verbesserung der Turbulenzen wird ferner vorgeschlagen, dass innerhalb des Gehäuses eine Verwirbelungsplatte angeordnet ist, die den durch die Umlenkflächen gebildeten Wasserstrom quert und in den Querungsbereichen mit Wasserdurchtrittsöffnungen versehen ist.

Die Erfindung wird in weiterer Folge anhand eines Ausführungsbeispiels mithilfe der beiliegenden Zeichnungen näher erläutert. Es zeigen hierbei die
Fig. 1 das in der Fig. 2 gezeigte Gehäuse der erfindungsgemäßen Vorrichtung von links gesehen, und die
Fig. 2 eine Vorderansicht einer Ausführungsform einer erfindungsgemäßen Vorrichtung.

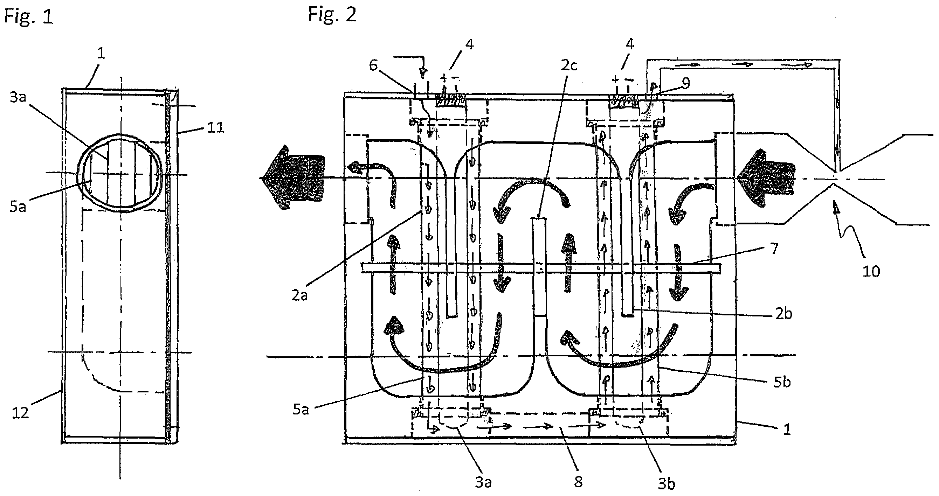

Anhand der Fig. 1 und 2 wird eine Ausführungsform der erfindungsgemäßen Vorrichtung erläutert. Die Vorrichtung umfasst ein Gehäuse 1 mit einem Zulauf für das zu desinfizierende Wasser, das in der Fig. 2 auf der rechten Seite des Gehäuses 1 einströmend dargestellt ist. Das Gehäuse 1 bildet in seine Gehäuseinneren Umlenkflächen 2a, 2b, 2c aus, die in Form und Anzahl variieren können und für das einströmende Wasser eine mäanderförmige Strömung innerhalb des Gehäuses 1 mit hoher Turbulenz sicherstellen. Der Strömungsverlauf ist in der Fig. 2 mit dick eingezeichneten Pfeilen angedeutet und stellt jene Mischstrecke dar, in der sich ein Großteil der Desinfektion des Wassers vollzieht. Um die Turbulenz der sich einstellenden Wasserströmung zu erhöhen kann ferner zumindest eine Verwirbelungsplatte 7 im Gehäuseinneren angeordnet sein, die den durch die Umlenkflächen 2 gebildeten Wasserstrom quert und in den Querungsbereichen mit Wasserdurchtrittsöffnungen versehen ist.

An den beiden Umlenkflächen 2a und 2b sind im gezeigten Ausführungsbeispiel UV-Lichtquellen 3a, 3b angeordnet, die in einer oberen Abdeckung des Gehäuses 1 austauschbar gehalten sind und jeweils eine Stromversorgung 4 aufweisen. Die Ausführung und Anzahl sowie der Ort der Anordnung der UV-Lichtquellen 3 können variieren, so können sie etwa auch an den seitlichen Innenwänden des Gehäuses 1 angeordnet sein. Wesentlich ist jedoch, dass sie eine in das Gehäuseinnere gerichtete Emission des UV-Lichts aufweisen, sodass eine Exposition der innerhalb der Gehäuses 1 geführten Wasserströmung durch das von den UV-Lichtquellen 3 emittierte UV-Licht gegeben ist. Die beiden UV-Lichtquellen 3a,3b sind des Weiteren jeweils mit einer gasdichten Umhüllung 5a,5b versehen, die über Dichtungen wasserdicht in der oberen Abdeckung und einer unteren Abdeckung des Gehäuses 1 befestigt und etwa in einer Ausnehmung der entsprechenden Umlenkfläche 2 dicht angeordnet sind. Die Umhüllungen 5a, 5b sind etwa rohrförmig ausgeführt und queren in der gezeigten Ausführungsform auch die sich im Gehäuseinneren einstellende Wasserströmung, sodass sie von ihr umspült werden. Die in der Fig. 2 ersichtliche, linke Umhüllung 5a ist ferner mit einer an der oberen Abdeckung des Gehäuses 1 angeordneten Ansaugöffnung 6 verbunden, über die Umgebungsluft angesaugt und der Umhüllung 5a zugeführt wird. Der weitere Strömungsverlauf ist in der Fig. 2 mit dünn eingezeichneten Pfeilen angedeutet. Die angesaugte Luft umspült dabei die in der Fig. 2 ersichtliche, linke UV-Lichtquelle 3a und gelangt schließlich in den nahe der unteren Abdeckung des Gehäuses 1 liegenden Bereich der Umhüllung 5a, der über einen Luftströmungskanal 8 mit dem unteren Bereich der in der Fig. 2 ersichtlichen, rechten Umhüllung 5b verbunden ist. Die angesaugte Luft umspült in ihrem weiteren Strömungsverlauf die in der Fig. 2 ersichtliche, rechte UV-Lichtquelle 3b und gelangt schließlich in den nahe der oberen Abdeckung des Gehäuses 1 liegenden Bereich der in der Fig. 2 ersichtlichen, rechten Umhüllung 5b, der mit einer an der oberen Abdeckung des Gehäuses 1 angeordneten Abgabeöffnung 9 verbunden ist. Während des Verlaufes dieser Strömungsstrecke wird die angesaugte Umgebungsluft zunehmend mit Ozon angereichert, das sich aufgrund der Bestrahlung mit dem von den UV-Lichtquellen 3 emittierten UV-Licht bildet. Über die Abgabeöffnung 9 wird die mit Ozon angereicherte Luft der Beimischeinheit 10 zugeführt, die etwa als Venturidüse ausgeführt sein kann und in der Fig. 2 lediglich schematisch dargestellt ist. Über die Beimischeinheit 10 wird die mit Ozon angereicherte Luft der Wasserströmung im Zulauf des Gehäuses 1 zugeführt.

Wie in der Fig. 1 ersichtlich ist, ist das Gehäuse 1 zur visuellen Inspektion des Gehäuseinneren mit einer durchsichtigen Platte 11 versehen. Die durchsichtige Platte 11 ist von ausreichender Größe, um eine Sichtkontrolle der Wasserströmung, der Bläschenbildung innerhalb der Wasserströmung sowie der Funktion der UV-Lichtquellen 3 zu ermöglichen. Im gezeigten Ausführungsbeispiel erstreckt sich die durchsichtige Platte 11 über die gesamte Vorderfläche des Gehäuses 1 und deckt die Vorderfläche wasserdicht ab. In der gezeigten Ausführungsform ist das Gehäuse 1 auf der der durchsichtigen Platte 11 gegenüberliegenden Seite in Richtung der durchsichtigen Platte 11 verspiegelt ausgeführt, etwa über eine die Rückseite des Gehäuses 1 bildende, verspiegelte Grundplatte 12. Die UV-Lichtquellen 3 unterstützen nicht nur die Desinfektion des Wassers, sondern stellen auch eine ausreichende Beleuchtung des Gehäuseinneren sicher, um die vorgenannte visuelle Inspektion zu ermöglichen.

Die in das Gehäuseinnere abstehenden Umlenkflächen 2 ermöglichen einerseits eine Verlängerung der Mischstrecke bei gegebenen Gehäuseabmessungen und verstärken andererseits die Turbulenz der Wasserströmung. Beide Effekte verbessern den Kontakt des Wassers mit Ozon und dadurch die desinfizierende Wirkung. Aufgrund der Anordnung zumindest einer UV-Lichtquelle 3 am Gehäuse 1 oder innerhalb des Gehäuses 1 mit einer in das Gehäuseinnere gerichteten Emission des UV-Lichts wird die desinfizierende Wirkung verstärkt, sodass bei demselben elektrischen Energieverbrauch zum Betrieb der UV-Lichtquelle eine verbesserte Desinfektion bewirkt werden kann.

Mithilfe der Erfindung wird somit eine Vorrichtung zur Desinfektion von Wasser eines Badebeckens bereitgestellt, die eine verbesserte Desinfektion ermöglicht und dabei platzsparender und optisch ansprechender als herkömmliche Vorrichtungen ausgeführt werden kann. Zudem werden Fehlfunktionen der Vorrichtung auch für den Laien leichter erkennbar.

## Patentansprüche

1. Vorrichtung zur Desinfektion von Wasser eines Badebeckens mit einem Zulauf für Wasser vom Badebecken, einer Ozonierungseinrichtung und einer Mischstrecke für ozonhältiges Wasser, wobei die Ozonierungseinrichtung zumindest eine UV-Lichtquelle (3) zur Bildung von Ozon sowie eine Beimischeinheit (10) zur Beimengung des gebildeten Ozons zum Wasser des Zulaufs umfasst und die Mischstrecke ein mit dem Zulauf verbundenes Gehäuse (1) umfasst, wobei die zumindest eine UV-Lichtquelle (3) am Gehäuse (1) oder innerhalb des Gehäuses (1) mit einer in das Gehäuseinnere gerichteten Emission des UV-Lichts angeordnet ist und das Gehäuse (1) in das Gehäuseinnere abstehende Umlenkflächen (2) für das Wasser bildet, die eine mäanderförmige Strömung innerhalb des Gehäuses (1) sicherstellen, und das Gehäuse (1) eine Ansaugöffnung (6) für Luft sowie eine mit der Beimischeinheit (10) verbundene Abgabeöffnung (9) aufweist,
**dadurch gekennzeichnet, dass**
das Gehäuse (1) zur visuellen Inspektion des Gehäuseinneren mit einer durchsichtigen Platte (11) versehen ist und die zumindest eine innerhalb des Gehäuses (1) angeordnete UV-Lichtquelle (3) eine Umhüllung (5) aufweist, die an einer Umlenkfläche (2) angeordnet ist oder einen Teil der Umlenkfläche (2) bildet, wobei innerhalb des Gehäuses (1) eine Abfolge parallel angeordneter und jeweils mit einer UV-Lichtquelle (3) versehener Umlenkflächen (2) vorgesehen ist und die Umhüllungen (5) aufeinanderfolgender UV-Lichtquellen (3) über einen Luftströmungskanal (8) miteinander verbunden sind.

2. Vorrichtung nach Anspruch 1, **dadurch gekennzeichnet, dass** die Umhüllung (5) der zumindest einen innerhalb des Gehäuses (1) angeordneten UV-Lichtquelle (3) wasserdicht innerhalb des Gehäuses (1) angeordnet ist, und die UV-Lichtquelle (3) austauschbar innerhalb der Umhüllung (5) angeordnet ist.

3. Vorrichtung nach Anspruche 1 oder 2, **dadurch gekennzeichnet, dass** das Gehäuse (1) zumindest auf der der durchsichtigen Platte (11) gegenüberliegenden Seite in Richtung der durchsichtigen Platte (11) verspiegelt ausgeführt ist.

4. Vorrichtung nach einem der Ansprüche 1 bis 3, **dadurch gekennzeichnet, dass** innerhalb des Gehäuses (1) eine Verwirbelungsplatte (7) angeordnet ist, die den durch die Umlenkflächen (2) gebildeten Wasserstrom quert und in den Querungsbereichen mit Wasserdurchtrittsöffnungen versehen ist.

5. Badebecken mit einer Vorrichtung zur Desinfektion von Wasser des Badebeckens nach einem der Ansprüche 1 bis 4.

## Claims

1. Device for disinfecting water of a swimming pool, comprising an inlet for water from the swimming pool, an ozonation device and a mixing section for ozone-containing water, wherein the ozonation device comprises at least one UV light source (3) for generating ozone and an admixing unit (10) for admixing the generated ozone to the water of the inlet and the mixing section comprises a housing (1) connected to the inlet, wherein the at least one UV light source (3) is arranged on the housing (1) or within the housing (1) with an emission of the UV light directed into the housing interior and the housing (1) forms deflecting surfaces (2) for the water which project into the housing interior and which ensure a meandering flow within the housing (1), and the housing (1) has an intake opening (6) for air and a discharge opening (9) connected to the admixing unit (10), **characterized in that** the housing (1) is provided with a transparent plate (11) for visual inspection of the interior of the housing and the at least one UV light source (3) arranged inside the housing (1) has a sheathing (5), which is arranged on a deflecting surface (2) or forms a part of the deflecting surface (2), wherein a sequence of deflecting surfaces (2) arranged in parallel and provided in each case with a UV light source (3) is provided inside the housing (1), and the sheathings (5) of successive UV light sources (3) are connected to one another via an air flow channel (8).

2. Device according to claim 1, **characterized in that** the sheathing (5) of the at least one UV light source (3) arranged inside the housing (1) is arranged in a watertight manner inside the housing (1), and the UV light source (3) is interchangeably arranged inside the sheathing (5).

3. Device according to claim 1 or 2, **characterized in that** the housing (1) is designed in a mirrored manner at least on the side opposite the transparent plate (11) in the direction of the transparent plate (11).

4. Device according to one of claims 1 to 3, **characterized in that** a turbulence plate (7) is arranged inside the housing (1), which turbulence plate (7) crosses the water flow formed by the deflecting surfaces (2) and is provided with water passage openings in the crossing regions.

5. Swimming pool having a device for disinfecting water of the swimming pool according to one of the claims 1 to 4.

## Revendications

1. Dispositif de désinfection de l'eau d'un bassin de baignade avec une entrée pour l'eau du bassin de baignade, un moyen d'ozonation et une section de mélange pour l'eau contenant de l'ozone, dans lequel le moyen d'ozonation comprend au moins une source de lumière UV (3) pour la formation d'ozone et une unité de mélange (10) pour mélanger l'ozone formé à l'eau de l'entrée et la section de mélange comprend un boîtier (1) relié à l'entrée, dans lequel ladite au moins une source de lumière UV (3) est disposée sur le boîtier (1) ou à l'intérieur du boîtier (1) avec une émission de la lumière UV dirigée vers l'intérieur du boîtier et le boîtier (1) forme des surfaces de déviation (2) pour l'eau qui font saillie à l'intérieur du boîtier et qui assurent un écoulement en méandres à l'intérieur du boîtier (1), et le boîtier (1) présente une ouverture d'aspiration (6) pour de l'air ainsi qu'une ouverture de sortie (9) reliée à l'unité de mélange (10),
**caractérisé en ce que**
le boîtier (1) est pourvu d'une plaque transparente (11) pour l'inspection visuelle de l'intérieur du boîtier et ladite au moins une source de lumière UV (3) disposée à l'intérieur du boîtier (1) présente une enveloppe (5) qui est disposé sur une surface de déviation (2) ou qui fait partie de la surface de déviation (2), une succession de surfaces de déviation parallèles (2) pourvues chacune d'une source de lumière UV (3) étant prévue à l'intérieur du boîtier (1) et les enveloppes (5) de sources de lumière UV successives (3) étant reliées entre elles par un canal d'écoulement d'air (8).

2. Dispositif selon la revendication 1, **caractérisé en ce que** l'enveloppe (5) de ladite au moins une source de lumière UV (3) disposée à l'intérieur du boîtier (1) est disposée de manière étanche à l'eau à l'intérieur du boîtier (1), et la source de lumière UV (3) est disposée de manière remplaçable à l'intérieur de l'enveloppe (5).

3. Dispositif selon les revendications 1 ou 2, **caractérisé en ce que** le boîtier (1) est réalisé réfléchissant en direction de la plaque transparente (11) au moins sur le côté opposé à la plaque transparente (11).

4. Dispositif selon l'une des revendications 1 à 3, **caractérisé en ce qu'**une plaque de turbulence (7) est disposée à l'intérieur du boîtier (1), laquelle croise le courant d'eau formé par les surfaces de déviation (2) et est pourvue d'ouvertures de passage d'eau dans les zones de croisement.

5. Bassin de baignade doté d'un dispositif de désinfection de l'eau du bassin de baignade selon l'une des revendications 1 à 4.
